# FASCICULE DE BREVET EUROPEEN

(11) **EP 4 426 526 B1**
(45) Date de publication et mention de la délivrance du brevet: **08.10.2025**
(21) Numéro de dépôt: 22813249.4
(22) Date de dépôt: 03.11.2022
(51) Int. Cl.: B25J 15/00, B25J 15/06

(54) **PREHENSEUR**
GREIFER
GRIPPER

(30) Priorité: 04.11.2021 FR 2111735
(43) Date de publication de la demande: 11.09.2024
(73) Titulaire: Commissariat à l'Energie Atomique et aux Energies Alternatives, 75015 Paris (FR)
(72) Inventeur: KFOURY, Fares, 91191 Gif sur Yvette Cedex (FR); GROSSARD, Mathieu, 91191 Gif sur Yvette Cedex (FR)
(74) Mandataire: Cabinet Boettcher
(86) Numéro de dépôt international: PCT/EP2022/080731
(87) Numéro de publication internationale: WO 2023/079028

(56) Documents cités:
- EP-A1- 1 595 658
- EP-B1- 3 457 995
- DE-A1- 102014 223 118
- JP-A- 2014 076 522
- US-A1- 2014 197 652
- US-A1- 2015 028 613
- US-A1- 2018 036 145

## Description

La présente invention concerne le domaine de la manutention et plus particulièrement le domaine de la préhension.

### ARRIERE PLAN DE L'INVENTION

Classiquement un préhenseur comprend une pince comportant un bâti sur lequel une extrémité proximale d'un doigt actionné est articulée. L'extrémité distale du doigt comprend un mors généralement pourvu d'une surface antidérapante. Le doigt est généralement rectiligne ou courbe. Une telle pince est particulièrement adaptée à la saisie d'objets de géométrie similaire et idéalement prédéfinie. Une telle pince manque de polyvalence, particulièrement pour la saisie d'objets spéciaux comme des objets de grandes dimensions, plans, ou présentant une portion cylindrique ou conique. Il est alors nécessaire de changer la pince pour un outil adapté à de tels objets spéciaux. Des dispositifs de changements rapide de pince ont permis de réduire les temps d'immobilisation des préhenseurs. Cependant, la multiplicité des outils pour objets spéciaux rend de tels dispositifs de changement rapide couteux et encombrants. Un préhenseur similaire est décrit dans le document JP 2014 076522 A

### OBJET DE L'INVENTION

L'invention a notamment pour but d'améliorer la polyvalence d'un préhenseur.

### RESUME DE L'INVENTION

A cet effet, on prévoit, un préhenseur comportant un bâti et un doigt actionné, le doigt comprenant une première phalange distale et une deuxième phalange proximale qui est articulée sur le bâti autour d'un premier axe, la première phalange et la deuxième phalange étant reliées mécaniquement pour permettre une rotation de la première phalange autour d'un deuxième axe sensiblement parallèle au premier axe de manière à ce que le doigt puisse passer d'une configuration d'ouverture vers une configuration de serrage lorsque la première phalange et/ou la deuxième phalange effectue une rotation dans un premier sens relativement au bâti. Selon l'invention, le doigt comprend un élément d'adhésion commandable, le préhenseur comprenant une première butée pour limiter une première course angulaire d'une première rotation de la première phalange autour du deuxième axe dans un deuxième sens opposé au premier sens, la première course angulaire comprend un premier secteur angulaire strictement positif selon le deuxième sens et mesuré depuis un premier plan comprenant le premier axe et le deuxième axe.

On obtient un préhenseur dont la capacité à exercer une prise par adhésion présente une polyvalence améliorée et permet la saisie d'objets spéciaux pour lesquels le serrage est insuffisant à assurer une prise stable. Les temps de changements d'outils de préhension ainsi que l'espace de stockage pour outils de préhensions spéciaux sont réduits et les couts et encombrements de manipulateur mettant en œuvre de tels préhenseurs sont réduits.

Optionnellement, le préhenseur comporte une unité de commande pour commander l'élément d'adhésion.

Ceci permet à l'élément d'adhésion notamment d'exercer un effort de prise sur un objet visé.

Optionnellement, la première butée est une butée élastique.

Une amélioration sensible de la polyvalence du préhenseur est obtenue lorsque l'élément d'adhésion est agencé pour exercer un effort de prise selon une direction sensiblement orthogonale au premier axe.

Avantageusement, l'élément d'adhésion est solidaire de la première phalange.

Une réalisation légère et économique est obtenue lorsque le doigt est sous-actionné et qu'il comprend au moins un premier organe de rappel d'une phalange vers une position amenant à la configuration d'ouverture du doigt.

Le dispositif permet ainsi la manutention d'objets non préhensibles- tels que des objets plans- puisque le préhenseur comprend une première butée pour limiter une première course angulaire d'une première rotation de la première phalange autour du deuxième axe dans un deuxième sens opposé au premier sens.

Le secteur angulaire est avantageusement compris entre dix et quatre-vingt-dix degrés, préférentiellement entre vingt et soixante degrés.

Avantageusement, le préhenseur comprend un deuxième organe de rappel de la première phalange pour exercer un troisième effort de rappel qui amène la première phalange depuis une position située dans le premier secteur angulaire vers une position amenant à la configuration d'ouverture du doigt.

Le dispositif est aisément adaptable lorsque le deuxième organe de rappel comprend des moyens de réglage d'une position de sur-ouverture de la première phalange à partir de laquelle le troisième effort de rappel est exercé.

Le dispositif est aisément adaptable lorsque le deuxième organe de rappel comprend des moyens de réglage d'une position de sur-ouverture de la première phalange à partir de laquelle le troisième effort de rappel est exercé.

Une conception simple est obtenue lorsque le deuxième organe de rappel comprend un ressort et que les moyens de réglage de la position de sur-ouverture comprennent un câble de longueur réglable relié à une extrémité du ressort.

La polyvalence du préhenseur est améliorée lorsque le doigt comprend une troisième phalange intermédiaire articulée d'une part sur la deuxième phalange autour d'un troisième axe sensiblement parallèle au premier axe.

Le préhenseur est plus transparent et possède une réversibilité améliorée de l'actionnement qui permet un retour fidèle et un contrôle en effort par mesure directe du courant moteur lorsque la deuxième phalange comprend une première barre comprenant une première extrémité reliée de manière pivotante à la première phalange et une deuxième extrémité montée à pivotement sur le bâti autour du premier axe, et lorsque la deuxième phalange comprend également un actionneur linéaire comprenant une troisième extrémité reliée de manière pivotante à la première phalange et une quatrième extrémité montée à pivotement sur le bâti, la première barre et l'actionneur linéaire étant agencés pour former un premier quadrilatère déformable dans lequel une distance séparant la troisième extrémité de la quatrième extrémité peut être modifiée.

La compacité du préhenseur est améliorée lorsque la troisième phalange comprend une deuxième barre comprenant une cinquième extrémité articulée sur la première phalange et une sixième extrémité articulée sur une première bielle, la troisième phalange comprenant également une troisième barre comprenant une septième extrémité articulée sur la première phalange et une huitième extrémité articulée sur la première bielle, la première extrémité et la troisième extrémité étant articulée à la première bielle.

La compacité du préhenseur est encore améliorée lorsqu'un projeté orthogonal de la troisième extrémité sur une droite reliant la première extrémité et la huitième extrémité appartient à un segment reliant la première extrémité et la huitième extrémité.

On améliore encore la compacité du préhenseur lorsque la première extrémité est articulée sur la sixième extrémité.

Avantageusement, la deuxième phalange comprend un premier organe de rappel du doigt vers la configuration d'ouverture et/ou la troisième phalange comprend un deuxième organe de rappel du doigt vers la configuration d'ouverture. Avantageusement encore, l'organe de rappel comprend un élément élastique.

Avantageusement l'actionneur linéaire comprend un vérin à vis, préférentiellement un vérin comprenant une vis à billes.

On réduit l'hyperstaticité du mécanisme lorsque la première barre et/ou l'actionneur linéaire est relié au doigt par une liaison de type pivot glissant à glissement limité de troisième axe sensiblement parallèle au premier axe.

La précision du préhenseur est améliorée lorsque le préhenseur comprend au moins un codeur rotatif. L'invention concerne également un dispositif de préhension qui comprend une pluralité de préhenseurs du type décrit ci-dessus.

Le dispositif de préhension est particulièrement polyvalent lorsque chaque doigt de la pluralité de préhenseurs est articulé sur son bâti autour d'un quatrième axe sensiblement orthogonal au premier axe, voire lorsqu'une rotation de chaque doigt relativement au bâti autour du quatrième axe est actionnée.

La polyvalence du dispositif de préhension est encore améliorée lorsque chaque doigt de la pluralité de doigts est également monté à coulissement relativement au bâti, voire lorsqu'une translation de chaque doigt relativement au bâti est actionnée.

D'autres caractéristiques et avantages de l'invention ressortiront à la lecture de la description qui suit d'un mode de réalisation particulier/ d'une mise en œuvre particulière et non limitatif/limitative de l'invention.

### BREVE DESCRIPTION DES DESSINS

Il sera fait référence aux dessins annexés, parmi lesquels :
[Fig. 1] la figure 1 est une représentation schématique en plan d'un préhenseur selon un premier mode de réalisation de l'invention ;
[Fig. 2] la figure 2 est une représentation schématique du préhenseur de la figure 1 dans une première phase de serrage;
[Fig. 3] la figure 3 est une représentation schématique du préhenseur de la figure 1 dans une deuxième phase de serrage;
[Fig. 4] la figure 4 est une représentation schématique du préhenseur de la figure 1 dans une troisième phase de serrage;
[Fig. 5] la figure 5 est une représentation schématique en plan d'un préhenseur selon un deuxième mode de réalisation de l'invention dans un configuration de serrage ;
[Fig. 6] la figure 6 est une représentation schématique du préhenseur de la figure 5 dans une première phase de saisie plane;
[Fig. 7] la figure 7 est une représentation schématique du préhenseur de la figure 5 dans une deuxième phase de saisie plane;
[Fig. 8] la figure 8 est une représentation schématique du préhenseur de la figure 5 dans une troisième phase de saisie plane;
[Fig. 9] la figure 9 est une représentation schématique du préhenseur de la figure 5 dans une quatrième phase de saisie plane;
[Fig. 10] la figure 10 est une représentation schématique en perspective d'un dispositif de préhension selon un troisième mode de réalisation de l'invention ;
[Fig. 11] la figure 11 est une représentation schématique en perspective de différentes configurations du dispositif de préhension de la figure 10.

### DESCRIPTION DETAILLEE DE L'INVENTION

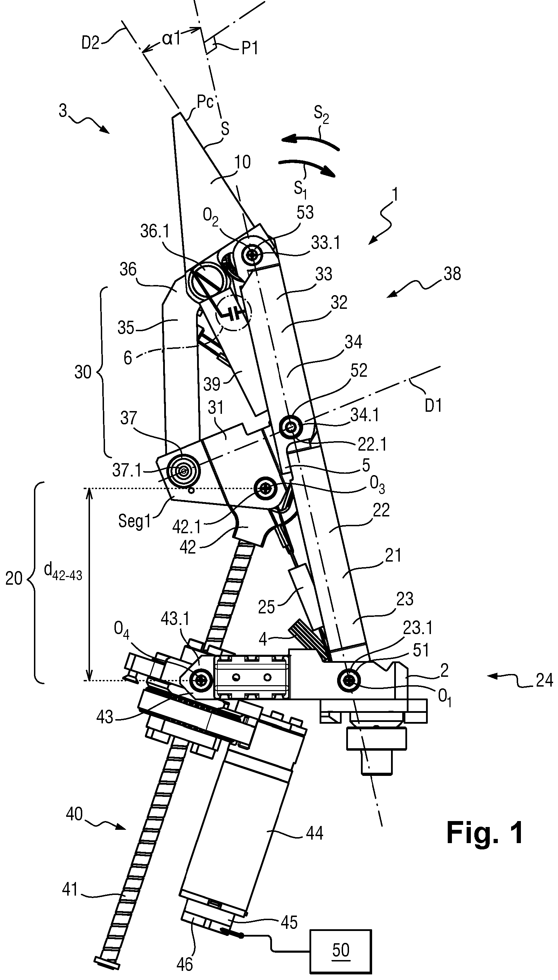

En référence aux figures 1 à 4, et selon un premier mode de réalisation qui ne fait pas partie de l'invention telle que revendiquée mais qui détaille les composants intervenant dans l'invention, le préhenseur selon l'invention, et généralement désigné 1, comporte un bâti 2 et un doigt 3 actionné. Le doigt 3 comprend une première phalange 10 distale et une deuxième phalange 20 proximale articulée sur le bâti 2 autour d'un premier axe 01. Ici, la phalange 10 et la phalange 20 sont reliées mécaniquement par une troisième phalange 30 pour permettre une rotation de la phalange 10 autour d'un deuxième axe O2 sensiblement parallèle au premier axe 01.

La phalange 20 comprend une première barre 21 comportant une première extrémité 22 reliée de manière pivotante en un premier point 22.1 de pivot à la phalange 10 par l'intermédiaire d'une bielle 31 de la phalange 30. La barre 21 comprend également une deuxième extrémité 23 articulée sur le bâti 2 autour de l'axe O1 en un deuxième point 23.1 de pivot. La phalange 20 comprend également un premier actionneur linéaire-ici un vérin 40 à vis à billes 41 - comprenant une troisième extrémité 42 reliée en un troisième point 42.1 de pivot de manière pivotante à la bielle 31 et une quatrième extrémité 43 montée à pivotement sur le bâti 2 en un quatrième point 43.1 de pivot. Le vérin 40 comprend un motoréducteur 44 pourvu d'un premier codeur rotatif 45 et d'un capteur de courant 46. Le motoréducteur 44, le codeur 45 et le capteur 46 sont reliés à une unité de contrôle et de commande 50.

Comme il apparaît sur la figure 1, la barre 21 et le vérin 40 sont agencés pour former un premier quadrilatère 24 déformable dans lequel une distance d42-43 séparant l'extrémité 42 de l'extrémité 43 peut être modifiée.

Ainsi, le premier quadrilatère 24 déformable comprend le bâti 2, la bielle 31, la barre 21 et l'actionneur 40 qui fait office de dernière barre de longueur modifiable du quadrilatère 24.

Ici, les points de pivot 42.1 et 43.1 reliant le vérin 40 respectivement au doigt 3 et au châssis 2 réalisent chacun une liaison de type pivot glissant à glissement limité selon respectivement un troisième axe O3 et un quatrième axe O4 sensiblement parallèles au premier axe O1. Le glissement selon le troisième axe O3 et le quatrième axe O4 est dit limité en ce que l'amplitude du glissement est limitée par des butées (non représentées).

La phalange 30 comprend une deuxième barre 32 comprenant une cinquième extrémité 33 articulée sur la phalange 10 en un cinquième point 33.1 de pivot et une sixième extrémité 34 articulée sur la bielle 31 en un sixième point 34.1 de pivot confondu avec le point 22.1. La phalange 30 comprend également une troisième barre 35 comprenant une septième extrémité 36 articulée en un septième point 36.1 de pivot sur la phalange 10 et une huitième extrémité 37 articulée en un huitième point 37.1 de pivot sur la bielle 31. La bielle 31, la phalange 10, la deuxième barre 32 et la troisième barre 35 forment un deuxième quadrilatère 38 déformable.

Comme visible en figure 1, un projeté orthogonal de la troisième extrémité 42 sur une première droite D1 reliant la première extrémité 22 et la huitième extrémité 37 appartient à un segment Seg1 reliant la première extrémité 22 et la huitième extrémité 37.

La deuxième phalange 20 comprend un premier ressort 25 de traction qui s'étend entre le point 23.1 et le point 42.1 pour réduire la longueur de la diagonale du quadrilatère 24, à savoir la distance séparant le points 23.1 du point 42.1. vers la configuration d'ouverture.

Le bâti 2 comprend une butée 4 contre laquelle la barre 21 est amenée en appui sous l'effet du vérin 40 lorsque ce dernier commande un mouvement d'ouverture du doigt 3.. La butée 4 limite ainsi l'amplitude de la rotation de la barre 21 autour de l'axe O1 dans un deuxième sens S2 opposé au premier sens S1.

La troisième phalange 30 comprend un deuxième ressort 39 de traction qui s'étend entre le point 22.1 et le point 36.1 pour réduire la longueur de la diagonale du quadrilatère 38, à savoir la distance séparant le points 22.1 du point 36.1.

La barre 32 comprend une butée 5 qui vient en saillie de l'extrémité 34. La butée 5 est amenée en appui contre la barre 21 sous l'effet du ressort 25 qui exerce un premier effort de rappel de la barre 32. La butée 5 limite ainsi l'amplitude de la rotation de la barre 32 autour du point 34.1 dans le deuxième sens S2 vers la configuration d'ouverture.

La phalange 10 comprend une butée 6 qui est amenée en appui contre la barre 32 sous l'effet du ressort 39. La butée 6 limite ainsi l'amplitude de la rotation de la phalange 10 autour de l'axe O2 dans le deuxième sens S2. Ici, la butée 6 bloque la rotation de la phalange 10 autour de l'axe O2 lorsque la phalange 10 est positionnée de manière à ce qu'un angle α1 mesuré entre un premier plan P1 comprenant l'axe O1 et l'axe O2 et une deuxième droite D2 orthogonale à l'axe O2 et qui passe par un point de contact Pc de la phalange 10- dans le cas d'une phalange 10 présentant une surface de contact S plane, le point de contact est un point quelconque de la surface plane S- soit égal à dix degrés.

Enfin, les points de pivot 22.1, 23.1 et 33.1 comprennent respectivement un deuxième codeur rotatif 51, un troisième codeur rotatif 52 et un quatrième codeur rotatif 53 reliés à l'unité 50.

Le fonctionnement du préhenseur 1 va être décrit en application au serrage d'un objet 60 (ici de forme cylindrique) et en référence aux figures 1 à 4.

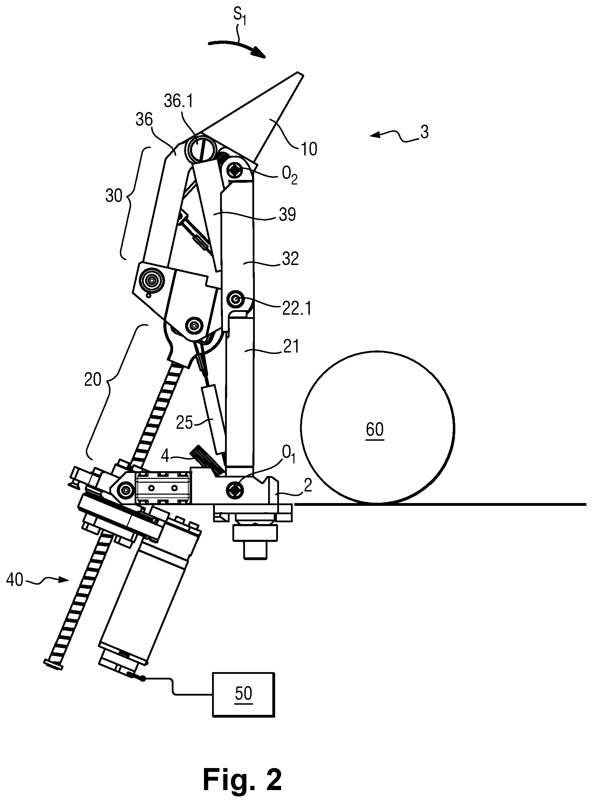

Selon une première étape, l'unité 50 commande le vérin 40 de manière à faire passer le doigt 3 dans une configuration d'ouverture représentée en figure 1. Pour ce faire, l'unité 50 peut, en fonction du pas de la vis 41, commander une rétraction de la vis 41 ou couper l'alimentation du motoréducteur 44. Le doigt 3 adopte alors sa configuration d'ouverture sous l'effet des ressorts 25 et 39 qui amènent respectivement la barre 21, la barre 32 et la phalange 10 au contact des butées 4, 5 et 6. Une fois l'objet 60 présenté au préhenseur 1, et selon une deuxième étape, l'unité 50 commande le vérin 40 de manière à déployer la vis 41 -c'est-à-dire de manière à augmenter la distance séparant les points 23.1 et 42.1. Le doigt 3 effectue alors une rotation autour du premier axe O1 dans un premier sens S1. Sous l'action des ressorts 25 et 39 qui maintiennent la barre 32 et la phalange 10 respectivement au contact des butées 5 et 6, la rotation du doigt 3 consiste en une rotation de la barre 21 autour de l'axe O1, les autres éléments du doigt 3 demeurant immobiles relativement à la barre 21. En particulier, les phalanges 10 et 30 sont immobiles l'une par rapport à l'autre ainsi que relativement à la barre 21. Une fois que la barre 21 de la phalange 20 vient au contact de l'objet 60, le déploiement de la vis 41 provoque une rotation de la phalange 30 relativement à la phalange 20 autour du point 22.1 (figure 2) dans le sens S1. Soumise à l'action du ressort 39, la phalange 10 est maintenue contre la butée 6 et demeure immobile relativement à la phalange 30.

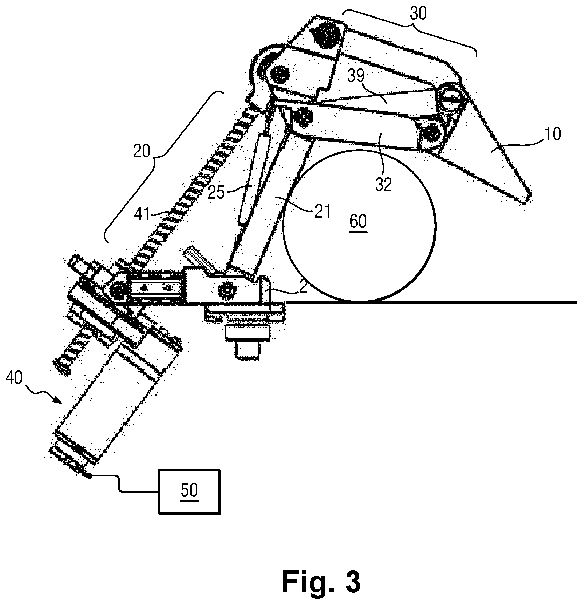

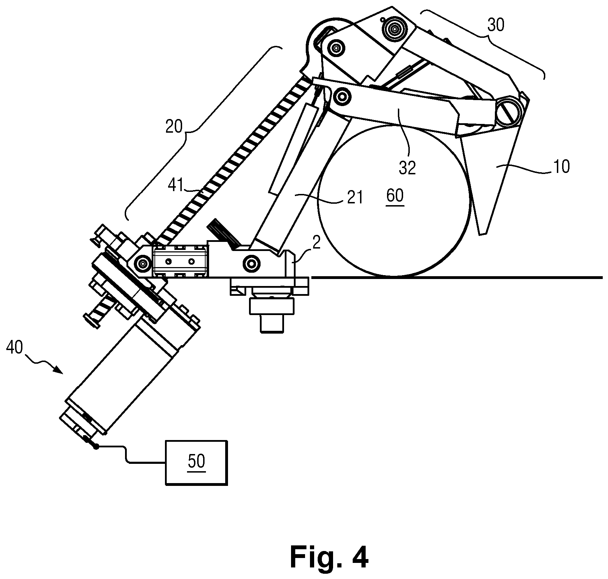

La poursuite du déploiement de la vis 41 entraîne la venue de la barre 32 de la phalange 30 au contact de l'objet 60 (figure 3). Selon une troisième étape, la rotation de la phalange 30 étant bloquée, la phalange 10 entame une rotation dans le sens S1 autour de l'axe O2 jusqu'à venir au contact de l'objet 60 (figure 4). L'unité de commande 50, sur la base des informations en provenance des codeurs 45, 51, 52 et 53 ainsi que du capteur de courant 46 détermine les positions des phalanges 10, 20 et 30, l'effort appliqué en extrémité de la vis 41 et calcule un effort de serrage appliqué par serrage appliqué par chacune des phalanges 10, 20, 30 du doigt 3 sur l'objet 60. Il est ainsi possible de définir et maitriser un effort de serrage maximal à appliquer sur l'objet 60. L'ouverture du préhenseur 1 se fait en commandant une rétraction de la vis 41. L'ouverture du préhenseur 1 suit l'ordre inverse des étapes de serrage.

Les éléments identiques ou analogues à ceux précédemment décrits porteront une référence numérique identique à celle-ci dans la description qui suit de deux autres modes de réalisation de l'invention.

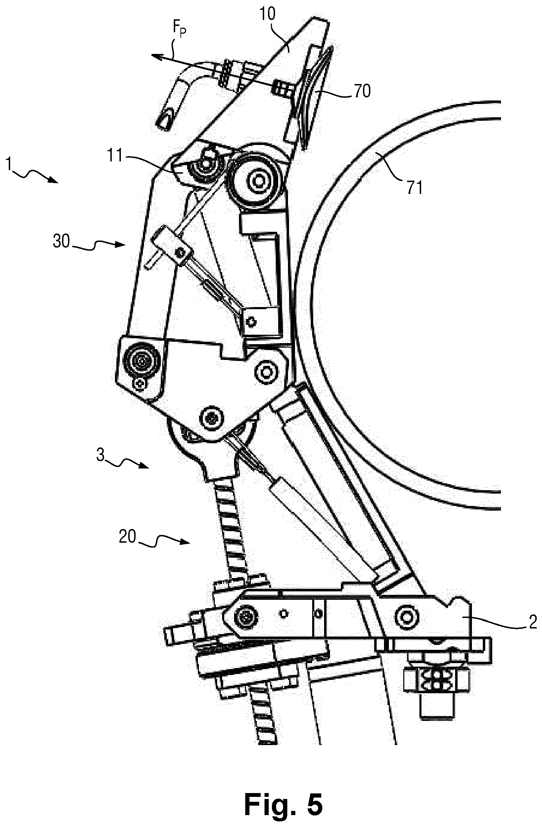

Selon un deuxième mode de réalisation représenté sur figure 5 à 7, la phalange 10 comprend une ventouse pneumatique 70 agencée pour exercer un effort de prise Fp selon une direction sensiblement orthogonale au premier axe. La ventouse 70 est relié à une pompe à vide (non représentée) reliée à l'unité 50.

La phalange 10 comprend, ici, une butée 11 qui coopère avec une surface 26 de la barre 32 pour limiter une première course angulaire C1 d'une première rotation de la phalange 10 autour de l'axe O2 dans le deuxième sens S2. Ici, la course angulaire C1 comprend un premier secteur angulaire Sa1 strictement positif selon le deuxième sens et mesuré depuis le plan P1. Le secteur angulaire Sa1 mesure, ici, soixante degrés.

Le doigt 3 comprend également un troisième ressort de torsion 12 qui s'étend autour d'un arbre 13 de liaison en rotation de la phalange 10 à la phalange 30. Le ressort 12 comprend un fil 14 dont une extrémité 14.1 est reliée à la première extrémité 15.1 d'un câble 15. La deuxième extrémité 15.2 du câble 15 est reliée à la phalange 20. La longueur du câble 15 est réglable à l'aide d'un serre-câble 16. Le fil 14 vient en appui contre une surface 17 de la phalange 10 pour exercer un troisième effort de rappel qui amène la phalange 10 depuis une position située dans le premier secteur angulaire Sa1 vers une position amenant à la configuration d'ouverture du doigt 3 représentée en figure 1. La longueur du câble 15 permet de régler une position de sur-ouverture de la phalange 10 à partir de laquelle le troisième effort de rappel est exercé. En d'autres termes, la butée 6 rigide du premier mode de réalisation est remplacée par une butée élastique réalisée par le fil 14. La butée 11 est, ici, une première butée. Le ressort 12 est ici un deuxième organe de rappel exerçant un deuxième effort de rappel.

La figure 5 illustre une utilisation du préhenseur 1 selon le deuxième mode de réalisation pour la préhension d'un objet cylindrique 71 dont une demi-circonférence est supérieure à une longueur du doigt 3.

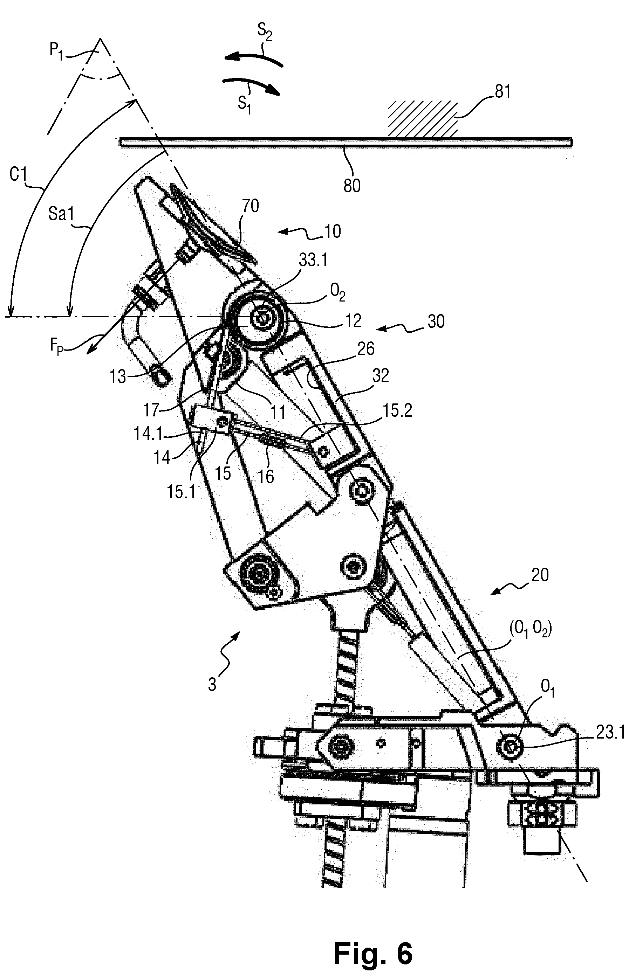

Une utilisation particulière du préhenseur 1 selon le deuxième mode de réalisation est décrite en lien avec la préhension d'un deuxième objet plan 80 qui repose sur un appui 81 et en référence aux figures 6 à 9.

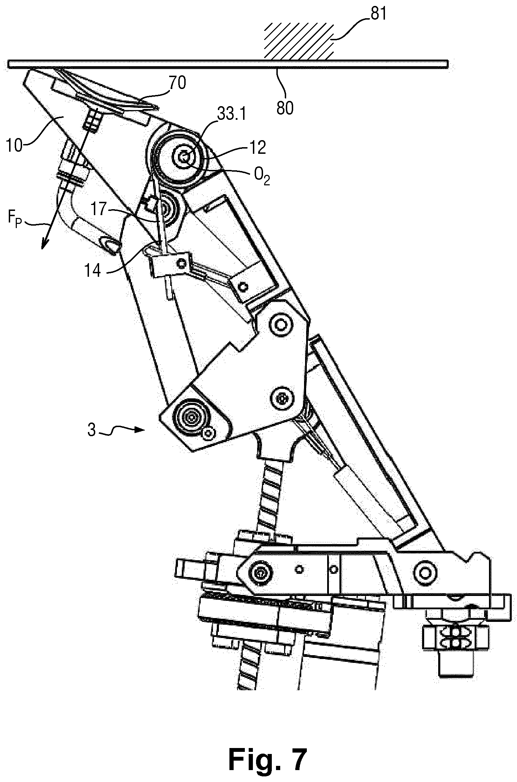

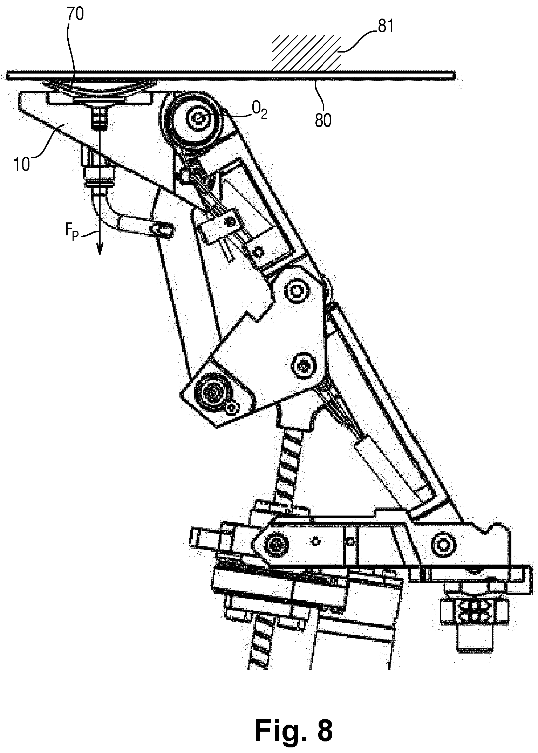

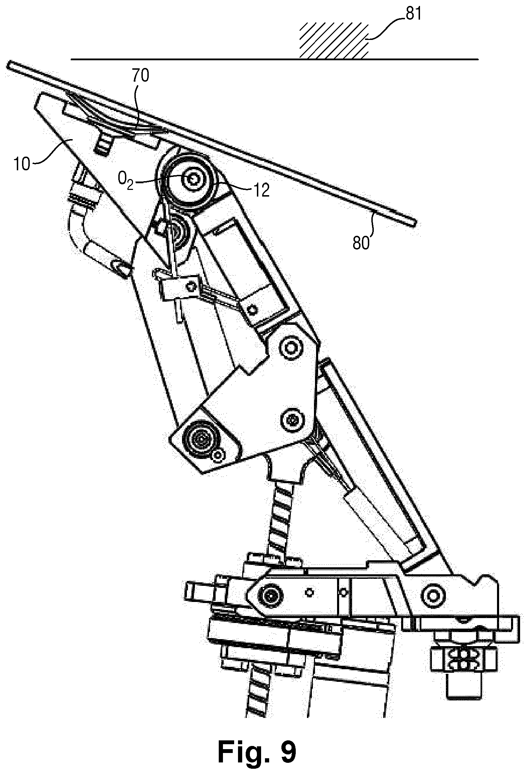

Selon une première étape, le doigt 3 est placé en configuration d'ouverture et la phalange 10 est approchée de l'objet 80. Une extrémité de la phalange 10 entre en contact avec l'objet 80. Selon une deuxième étape représentée en figure 7, on commande une approche du préhenseur 1 de l'objet 80 qui provoque une rotation de la phalange 10 autour du point 33.1 selon le sens S2. La surface 17 de la phalange 10 est alors en appui sur le fil 14 et comprime le ressort 12. Selon une troisième étape représentée en figure 8, le mouvement d'approche du préhenseur 1 se poursuit jusqu'à ce que la phalange 10 adopte une position dans laquelle la ventouse 70 est appliquée sur l'objet 80. Selon une troisième étape, l'unité 50 commande la ventouse 70 pour qu'elle exerce un effort de prise sur l'objet 80. Selon une quatrième étape représentée en figure 9, on commande un éloignement du préhenseur 1 de l'appui 81. L'objet 80 est maintenu solidaire de la phalange 10 par la ventouse 70. Au fur et à mesure de l'éloignement du préhenseur 1 de l'appui 81, la phalange 10 effectue une rotation autour de l'axe O2 dans le sens S1 sous l'effet du ressort 12.

Un tel préhenseur 1 permet de saisir des objets plans de grande dimension et des objets de taille plus réduite par serrage.

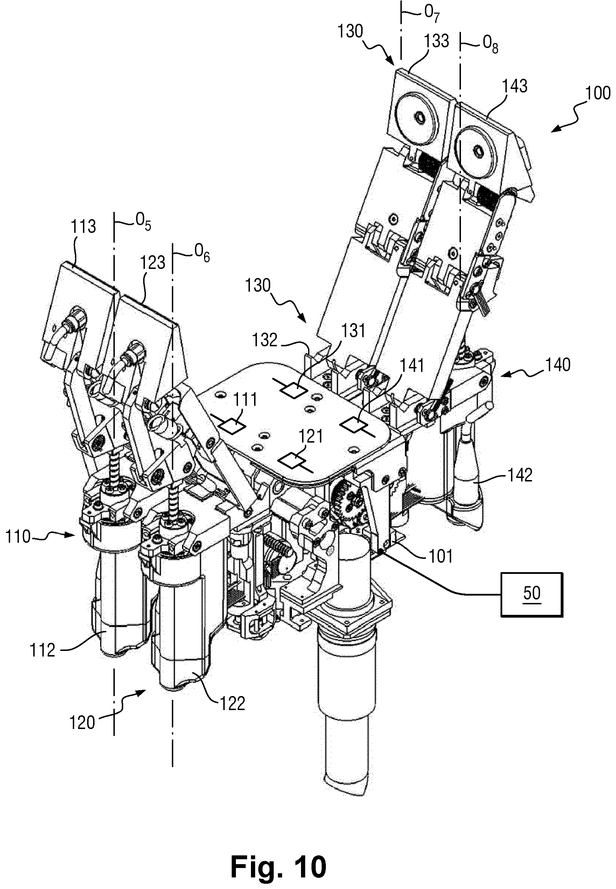

Selon un troisième mode de réalisation représenté en figure 10, un dispositif de préhension 100 comprend un premier préhenseur 110, un deuxième préhenseur 120, un troisième préhenseur 130 et un quatrième préhenseur 140 dont les doigts respectifs 113, 123, 133 et 143 sont reliés à un même bâti 101.

Les doigts 113, 123, 133 et 143 sont montés à coulissement relativement au bâti 101 respectivement à l'aide d'un deuxième vérin électrique 111, un troisième vérin électrique 121, un quatrième vérin électrique 131, un cinquième vérin électrique 141 dont les tiges de sortie translatent selon des directions parallèles. Plus particulièrement, les vérins 111 et 121 sont agencés de manière à ce que leurs tiges de sorties soient alignées et se déploient dans des sens opposés. Les vérins 131 et 141 sont quant à eux agencés de manière à ce que leurs tiges de sorties soient alignées et se déploient dans des sens opposés. Les vérins 111, 121, 131 et 141 sont reliés à l'unité 50.

Les doigts 113, 123, 133 et 143 sont également montés à rotation relativement au bâti 101 respectivement à l'aide d'un premier motoréducteur 112, un deuxième motoréducteur 122, un troisième motoréducteur 132 et un quatrième motoréducteur 142 reliés à l'unité de commande 50. Les doigts 113, 123, 133 et 143 sont respectivement montés à rotation relativement au bâti 101 autour d'un cinquième axe O5, un sixième axe O6, un septième axe O7 et un huitième axe O8 verticaux selon la représentation de la figure 10.

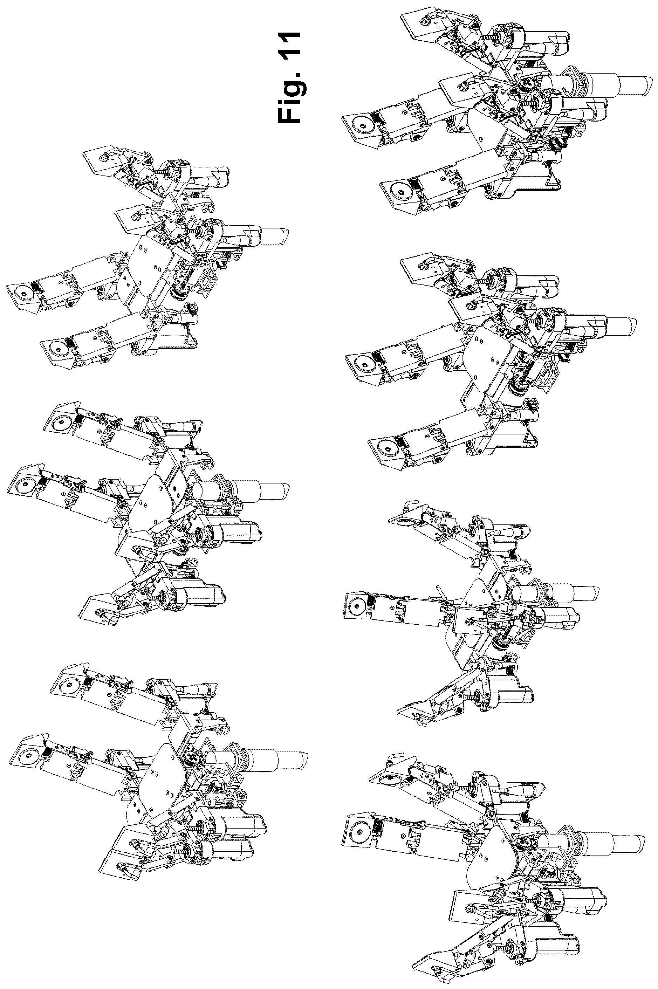

La disposition relative des doigts 113, 123, 133 et 143 relativement au bâti peut alors adopter une pluralité de configurations représentées en figure 11 ce qui apporte une grande polyvalence au dispositif 100.

Bien entendu, l'invention n'est pas limitée au mode de réalisation décrit mais englobe toute variante entrant dans le champ de l'invention telle que définie par les revendications.

En particulier,
- bien qu'ici la deuxième phalange possède une structure de type quadrilatère déformable dans laquelle une des barres articulées comprend l'actionneur linéaire, l'invention s'applique également à d'autres types de deuxième phalange comme par exemple une deuxième phalange possédant une structure à parallélogramme déformable intégrant un actionneur agissant sur la longueur de la diagonale du parallélogramme ;
- bien qu'ici la deuxième phalange possède une structure de type quadrilatère déformable dans laquelle une des barres articulées comprend l'actionneur linéaire, l'invention s'applique également à d'autres types de deuxième phalange comme par exemple une deuxième phalange possédant une structure à parallélogramme déformable intégrant un actionneur agissant sur la longueur de la diagonale du parallélogramme ;
- bien qu'ici le préhenseur comprenne un doigt unique, l'invention s'applique également à un préhenseur comprenant un doigt et un obstacle fixe ;
   - - bien qu'ici le dispositif de préhension comprenne quatre préhenseurs, l'invention s'applique également à un dispositif de préhension comprenant un nombre différent de préhenseurs comme par exemple deux préhenseurs, trois préhenseurs ou plus de quatre ;
- bien qu'ici le dispositif de préhension comprenne quatre préhenseurs dont les doigts sont reliés à un même bâti, l'invention s'applique également à un dispositif de préhension dont les bâtis des différents préhenseurs sont reliés rigidement ou articulés l'un sur l'autre ;
- bien qu'ici la première et la deuxième phalange soient reliées par une troisième phalange, l'invention s'applique également à un doigt comprenant un nombre différent de phalanges comme par exemple un doigt comprenant une première phalange directement reliée mécaniquement à une deuxième phalange, ou une première phalange reliée à la deuxième phalange par l'intermédiaire de plus d'une phalange, comme par exemple deux ou trois phalanges supplémentaires;
- bien qu'ici la deuxième phalange comprenne un premier ressort, l'invention s'applique également à d'autres types de premier organe de rappel du doigt vers la configuration d'ouverture comme par exemple un aimant, un contrepoids ou un élément élastique autre qu'un ressort comme par exemple un empilement de rondelles élastiques de type Belleville, un bloc élastomère voire un ressort à gaz ;
- bien qu'ici la troisième phalange comprenne un deuxième ressort, l'invention s'applique également à d'autres types de troisième organe de rappel du doigt vers la configuration d'ouverture comme par exemple un aimant, un contrepoids ou un élément élastique autre qu'un ressort comme par exemple un empilement de rondelles élastiques de type Belleville, un bloc élastomère voire un ressort à gaz ;
- bien qu'ici la première phalange comprenne un troisième ressort, l'invention s'applique également à d'autres types de deuxième organe de rappel de la phalange vers la configuration d'ouverture comme par exemple un aimant, un contrepoids ou un élément élastique autre qu'un ressort comme par exemple un empilement de rondelles élastiques de type Belleville, un bloc élastomère voire un ressort à gaz ;
- bien qu'ici les organes de rappel dans les deuxième et troisième phalanges soient des ressorts de traction et que la configuration d'ouverture du préhenseur est définie par l'équilibre mécanique respectivement de la barre 21, la barre 32 et la phalange 10 au contact des butées 4, 5 et 6 sous l'action des dits organes de rappel et de l'actionneur 40, l'invention s'applique également à un préhenseur comprenant des organes de rappel à action bilatérale - traction et compression autour d'une position centrale d'action nulle - dans les deuxième et troisième phalanges, ne comprenant pas de butées 4, 5, 6, et où la configuration d'ouverture est définie par une longueur d'extension commandée de l'actionneur et les positions centrales des organes de rappels à action bilatérale
- bien qu'ici le doigt comprenne trois codeurs rotatifs de mesure des rotations des phalanges, l'invention s'applique également à un préhenseur comprenant un nombre différent de codeurs rotatifs comme par exemple deux codeurs pour trois articulations- et de manière plus générale un codeur de moins que le nombre de phalange, la position angulaire de la dernière articulation pouvant être déduite à partir des données des autres et de la géométrie du doigt ;
- bien qu'ici la ventouse soit positionnée sur la première phalange, l'invention s'applique également à d'autres implantation de la ventouse sur le doigt, comme par exemple une ventouse solidaire de la deuxième ou troisième phalange ;
- bien qu'ici le préhenseur comprenne une ventouse pneumatique, l'invention s'applique également à d'autres types d'éléments d'adhésion commandables comme par exemple une ventouse mécanique, magnétique, un organe adhésif par effet électrostatique, par adhérence sèche de type Van der Walls, un électroaimant, ou un adhésif sensible à la pression similaire à ceux des notes repositionnables ;
- bien qu'ici le secteur angulaire mesure quarante degrés, l'inventions s'applique également à d'autres valeurs du secteur angulaire comme par exemple un secteur angulaire compris entre dix et quatre-vingt-dix degrés, préférentiellement compris entre vingt et soixante degrés ; ;
- bien qu'ici les doigts soient montés à rotation autour d'un axe vertical, l'invention s'applique également à d'autres orientations du quatrième axe de rotation du doigt relativement au bâti, comme par exemple une orientation quelconque et préférentiellement orthogonale et /ou sécante au premier axe ;
- bien qu'ici les doigts sont dotés d'un mouvement de rotation et d'un mouvement de translation par rapport au bâti, l'invention s'applique également si la liaison comprenait deux axes de rotations permettant aux doigts une rotation perpendiculaire à la paume et des mouvements d'adduction/abduction, ou toute autre architecture de déplacement des doigts par rapport à la paume
- bien qu'ici la troisième phalange possède une structure de type quadrilatère déformable, l'invention s'applique également à d'autres types de structures de transmission de déplacement comme par exemple un train d'engrenage ou un ensemble poulies/courroies.

## Revendications

1. Préhenseur (1) comportant un bâti (2) et un doigt (3) actionné, le doigt (3) comprenant une première phalange distale (10) et une deuxième phalange proximale (20) qui est articulée sur le bâti (2) autour d'un premier axe (O1), la première phalange (10) et la deuxième phalange (20) étant reliées mécaniquement pour permettre une rotation de la première phalange (10) autour d'un deuxième axe (O2) sensiblement parallèle au premier axe (O1) de manière à ce que le doigt (3) puisse passer d'une configuration d'ouverture vers une configuration de serrage lorsque la première phalange (10) et/ou la deuxième phalange (20) effectue une rotation dans un premier sens (S1) relativement au bâti (2), le doigt comprenant un élément d'adhésion commandable, **caractérisé en ce que** le préhenseur comprend une première butée (11) pour limiter une première course angulaire (C1) d'une première rotation de la première phalange (10) autour du deuxième axe (O2) dans un deuxième sens (S2) opposé au premier sens (S1), la première course angulaire (C1) comprend un premier secteur angulaire (Sal) strictement positif selon le deuxième sens (S2) et mesuré depuis un premier plan (P1) comprenant le premier axe (O1) et le deuxième axe (O2).

2. Préhenseur (1) selon la revendication 1, dans lequel l'élément d'adhésion (70) est agencé pour exercer un effort de prise selon une direction sensiblement orthogonale au premier axe (O1).

3. Préhenseur (1) selon l'une quelconque des revendications précédentes, dans lequel le doigt (3) est sous-actionné et comprend au moins un premier organe de rappel (25) du doigt (3) ou de la première phalange (10) vers une configuration d'ouverture du doigt (3).

4. Préhenseur (1) selon l'une des revendications précédentes, dans lequel le premier secteur angulaire (Sal) est compris entre dix et quatre-vingt-dix degrés, préférentiellement entre vingt et soixante degrés.

5. Préhenseur (1) selon l'une des revendications précédentes, comprenant un deuxième organe de rappel (12) de la première phalange (10) pour exercer un deuxième effort de rappel qui amène la première phalange (10) depuis une position située dans le premier secteur angulaire (Sal) vers la configuration d'ouverture du doigt (3).

6. Préhenseur (1) selon la revendication 5, dans lequel le deuxième organe de rappel (12) comprend des moyens de réglage (15) d'une position de sur-ouverture de la première phalange (10) à partir de laquelle le deuxième effort de rappel est exercé.

7. Préhenseur (1) selon la revendication 6, dans lequel le deuxième organe de rappel comprend un ressort (12) et les moyens de réglage (15) de la position de sur-ouverture comprennent un câble (15) de longueur réglable relié à une extrémité du ressort (12).

8. Préhenseur (1) selon l'une des revendications précédentes, dans lequel le doigt (3) comprend une troisième phalange (30) reliant la première phalange (10) et la deuxième phalange (20),la troisième phalange (30) comprenant une deuxième barre (32) comprenant une cinquième extrémité (33) articulée sur la première phalange (10) et une sixième extrémité (34) articulée sur une première bielle (31), la troisième phalange (30) comprenant également une troisième barre (35) comprenant une septième extrémité (36) articulée sur la première phalange (10) et une huitième extrémité (37) articulée sur la première bielle (31), la première extrémité (22) et la troisième extrémité (42) étant articulée à la première bielle (31).

9. Préhenseur (1) selon la revendication 8, dans lequel un projeté orthogonal de la troisième extrémité (42) sur une droite (D1) reliant la première extrémité (22) et la huitième extrémité (37) appartient à un segment (Seg1) reliant la première extrémité (22) et la huitième extrémité (37).

10. Préhenseur (1) selon la revendication 8 ou la revendication 9, dans lequel la première extrémité (22) est articulée sur la sixième extrémité (34).

11. Préhenseur (1) selon l'une quelconque des revendications précédentes 8 à 10, dans lequel la deuxième phalange (20) comprend le premier organe de rappel (25).

12. Préhenseur (1) selon l'une quelconque des revendications 8 à 11, dans lequel la troisième phalange (30) comprend un quatrième organe de rappel (39) du doigt (3) vers la configuration d'ouverture.

13. Préhenseur (1) selon l'une quelconque des revendications précédentes dans lequel:
la deuxième phalange (20) comprend une première barre (21) comprenant une première extrémité (22) reliée de manière pivotante à la première phalange (10) et une deuxième extrémité (23) montée à pivotement sur le bâti (2) autour du premier axe (O1), et
la deuxième phalange (20) comprend également un actionneur linéaire (40) comprenant une troisième extrémité (42) reliée de manière pivotante à la première phalange (10) et une quatrième extrémité (43) montée à pivotement sur le bâti (2), la première barre (21) et l'actionneur linéaire (40) étant agencés pour former un premier quadrilatère déformable (24) dans lequel une distance séparant la troisième extrémité (42) de la quatrième extrémité (43) peut être modifiée.

14. Préhenseur (1) selon la revendication 13, dans lequel l'actionneur linéaire (40) comprend un vérin à vis, préférentiellement un vérin comprenant une vis à billes (41).

15. Préhenseur (1) selon l'une quelconque des revendications 13 à 14, dans lequel l'actionneur linéaire (40) est relié au doigt (3) et/ou au bâti (2) par une liaison de type pivot glissant à glissement limité de troisième axe (O3) sensiblement parallèle au premier axe (O1).

16. Dispositif de préhension (100) comprenant une pluralité de préhenseurs (110, 120, 130, 140) selon l'une quelconque des revendications précédentes.

17. Dispositif de préhension (100) selon la revendication 16, dans lequel chaque doigt (113, 123, 133, 143) de la pluralité de préhenseurs (110, 120, 130, 140) est articulé sur son bâti autour d'un cinquième axe (O5, O6, O7, O8) sensiblement orthogonal au premier axe (O1).

18. Dispositif de préhension (100) selon la revendication 17, dans lequel, une rotation de chaque doigt (3) relativement au bâti (2) autour du cinquième axe (O5, O6, O7, O8) est actionnée.

19. Dispositif de préhension (100) selon l'une quelconque des revendications 16 à 18, dans lequel chaque doigt (113, 123, 133, 143) de la pluralité de de doigts (113, 123, 133, 143) est également monté à coulissement relativement au bâti (2).

20. Dispositif de préhension (100) selon la revendication 19, dans lequel, une translation de chaque doigt (113, 123, 133, 143) relativement au bâti (2) est actionnée.

## Patentansprüche

1. Greifer (1), enthaltend ein Gestell (2) und einen aktuierten Finger (3), wobei der Finger (3) ein erstes distales Fingerglied (10) und ein zweites proximales Fingerglied (20) umfasst, das um eine erste Achse (01) herum an dem Gestell (2) angelenkt ist, wobei das erste Fingerglied (10) und das zweite Fingerglied (20) derart mechanisch miteinander verbunden sind, dass sich das erste Fingerglied (10) um eine im Wesentlichen parallel zu der ersten Achse (O1) verlaufende, zweite Achse (O2) herum drehen kann, sodass der Finger (3) aus einer Öffnungskonfiguration in eine Spannkonfiguration bewegbar ist, wenn das erste Fingerglied (10) und/oder das zweite Fingerglied (20) eine Drehbewegung in eine erste Richtung (S1) relativ zu dem Gestell (2) erfährt, wobei der Finger ein steuerbares Haftelement umfasst, **dadurch gekennzeichnet, dass** der Greifer einen ersten Anschlag (11) umfasst, der dazu dient, eine erste Winkelstrecke (C1) einer ersten, von dem ersten Fingerglied (10) durchgeführten Drehbewegung um die zweite Achse (O2) herum in eine zweite, der ersten Richtung entgegengesetzte Richtung (S2) zu begrenzen, wobei die erste Winkelstrecke (C1) einen ersten, in der zweiten Richtung (32) streng positiven Winkelsektor (Sa1) umfasst, der von einer ersten, die erste Achse (O1) und die zweite Achse (O2) umfassenden Ebene (P1) aus gemessen wird.

2. Greifer (1) nach Anspruch 1, wobei das Haftelement (70) dafür ausgelegt ist, eine Greifkraft in eine Richtung auszuüben, die im Wesentlichen orthogonal zu der ersten Achse (O1) verläuft.

3. Greifer (1) nach einem der vorhergehenden Ansprüche, wobei es sich bei dem Finger (3) um einen unteraktuierten Finger handelt, der zumindest ein erstes Rückstellorgan (25) umfasst, welches den Finger (3) oder das erste Fingerglied (10) in eine Öffnungskonfiguration des Fingers (3) zurückstellt.

4. Greifer (1) nach einem der vorhergehenden Ansprüche, wobei der erste Winkelsektor (Sal) zwischen zehn und neunzig Grad, vorzugsweise zwischen zwanzig und sechzig Grad, beträgt.

5. Greifer (1) nach einem der vorhergehenden Ansprüche, umfassend ein zweites Rückstellorgan (12) zum Zurückstellen des ersten Fingerglieds (10), das dazu dient, eine zweite Rückstellkraft auszuüben, welche das erste Fingerglied (10) aus einer in dem ersten Winkelsektor (Sa1) liegenden Position in die Öffnungskonfiguration des Fingers (3) zu bewegen.

6. Greifer (1) nach Anspruch 5, wobei das zweite Rückstellorgan (12) Einstellmittel (15) umfasst, die dazu dienen, eine Überöffnungsposition des ersten Fingerglieds (10) einzustellen, ab welcher die zweite Rückstellkraft ausgeübt wird.

7. Greifer (1) nach Anspruch 6, wobei das zweite Rückstellorgan eine Feder (12) umfasst und die Einstellmittel (15) zur Einstellung der Überöffnungsposition ein längenverstellbares Seil (15) umfassen, das mit einem Ende der Feder (12) verbunden ist.

8. Greifer (1) nach einem der vorhergehenden Ansprüche, wobei der Finger (3) ein drittes Fingerglied (30) umfasst, welches das erste Fingerglied (10) mit dem zweiten Fingerglied (20) verbindet, wobei das dritte Fingerglied (30) eine zweite Stange (32) umfasst, die ein an dem ersten Fingerglied (10) angelenktes fünftes Ende (33) sowie ein an einer ersten Pleuelstange (31) angelenktes sechstes Ende (34) aufweist, wobei das dritte Fingerglied (30) auch eine dritte Stange (35) umfasst, die ein an dem ersten Fingerglied (10) angelenktes siebtes Ende (36) sowie ein an der ersten Pleuelstange (31) angelenktes achtes Ende (37) aufweist, wobei das erste Ende (22) und das dritte Ende (42) an der ersten Pleuelstange (31) angelenkt sind.

9. Greifer (1) nach Anspruch 8, wobei eine orthogonale Projektion des dritten Endes (42) auf eine das erste Ende (22) und das achte Ende (37) miteinander verbindende Gerade (D1) zu einem Segment (Seg1) gehört, welches das erste Ende (22) und das achte Ende (37) miteinander verbindet.

10. Greifer (1) nach Anspruch 8 oder nach Anspruch 9, wobei das erste Ende (22) an dem sechsten Ende (34) angelenkt ist.

11. Greifer (1) nach einem der Ansprüche 8 bis 10, wobei das zweite Fingerglied (20) das erste Rückstellorgan (25) umfasst.

12. Greifer (1) nach einem der Ansprüche 8 bis 11, wobei das dritte Fingerglied (30) ein viertes Rückstellorgan (39) umfasst, welches den Finger (3) in die Öffnungskonfiguration zurückstellt.

13. Greifer (1) nach einem der vorhergehenden Ansprüche, wobei:
das zweite Fingerglied (20) eine erste Stange (21) umfasst, die ein schwenkbar mit dem erstem Fingerglied (10) verbundenes erstes Ende (22) und ein um die erste Achse (O1) herum verschwenkbar auf dem Gestell (2) montiertes zweites Ende (23) aufweist, und
das zweite Fingerglied (20) auch einen Linearantrieb (40) umfasst, der ein schwenkbar mit dem erstem Fingerglied (10) verbundenes drittes Ende (42) und ein verschwenkbar auf dem Gestell (2) montiertes viertes Ende (43) aufweist, wobei die erste Stange (21) und der Linearantrieb (40) dafür ausgelegt sind, ein erstes verformbares Viereck (24) zu bilden, im welchem ein Abstand zwischen dem dritten Ende (42) und dem vierten Ende (43) veränderbar ist.

14. Greifer (1) nach Anspruch 13, wobei der Linearantrieb (40) ein Spindelgetriebe, vorzugsweise ein Kugelumlaufspindelgetriebe (41) umfasst.

15. Greifer (1) nach einem der Ansprüche 13 bis 14, wobei der Linearantrieb (40) mit dem Finger (3) und/oder mit dem Gestell (2) mithilfe einer gleitenden Drehgelenkverbindung mit begrenztem Schlupf der im Wesentlichen parallel zu der ersten Achse (O1) verlaufenden dritten Achse (O3) verbunden ist.

16. Greifvorrichtung (100), umfassend eine Mehrzahl von Greifern (110, 120, 130, 140) nach einem der vorhergehenden Ansprüche.

17. Greifvorrichtung (100) nach Anspruch 16, wobei jeder Finger (113, 123, 133, 143) aus der Mehrzahl von Greifern (110, 120, 130, 140) um eine im Wesentlichen orthogonal zu der ersten Achse (O1) verlaufende fünfte Achse (O5, O6, O7, O8) herum an seinem Gestell angelenkt ist.

18. Greifvorrichtung (100) nach Anspruch 17, wobei eine von jedem Finger (3) relativ zu dem Gestell (2) durchgeführte Drehbewegung um die fünfte Achse (O5, O6, O7, O8) herum aktuiert ist.

19. Greifvorrichtung (100) nach einem der Ansprüche 16 bis 18, wobei jeder Finger (113, 123, 133, 143) aus der Mehrzahl von Fingern (113, 123, 133, 143) ebenfalls relativ zu dem Gestell (2) verschiebbar montiert ist.

20. Greifvorrichtung (100) nach Anspruch 19, wobei eine von jedem Finger (113, 123, 133, 143) relativ zu dem Gestell (2) durchgeführte Translation aktuiert ist.

## Claims

1. Gripper (1) comprising a frame (2) and an actuated finger (3), the finger (3) comprising a first distal phalanx (10) and a second proximal phalanx (20) which is articulated on the frame (2) about a first axis (01), the first phalanx (10) and the second phalanx (20) being mechanically connected to enable a rotation of the first phalanx (10) about a second axis (O2) substantially parallel to the first axis (01), such that the finger (3) can pass from an opening configuration to a clamping configuration, when the first phalanx (10) and/or the second phalanx (20) performs a rotation in a first direction (S1) relative to the frame (2), the finger comprising a controllable adhesion element, being **characterized in that** the gripper comprises a first abutment (11) to limit a first angular stroke (C1) of a first rotation of the first phalanx (10) about the second axis (O2) in a second direction (S2) opposite the first direction (S1), the first angular stroke (C1) comprises a first angular sector (Sal) which is strictly positive in the second direction (S2) and measured from a first plane (P1) comprising the first axis (01) and the second axis (O2).

2. Gripper (1) according to claim 1, wherein the adhesion element (70) is arranged to exert a gripping force in a direction substantially orthogonal to the first axis (01).

3. Gripper (1) according to any one of the preceding claims, wherein the finger (3) is under-actuated and comprises at least one first member (25) for returning the finger (3) or the first phalanx (10) to an opening configuration of the finger (3).

4. Gripper (1) according to one of the preceding claims, wherein the first angular sector (Sal) is between ten and ninety degrees, preferably between twenty and sixty degrees.

5. Gripper (1) according to one of the preceding claims, comprising a second return member (12) of the first phalanx (10) to exert a second return force which brings the first phalanx (10) from a position located in the first angular sector (Sal) to the opening configuration of the finger (3).

6. Gripper (1) according to claim 5, wherein the second return member (12) comprises means (15) for adjusting a position of over-opening of the first phalanx (10) from which the second return force is exerted.

7. Gripper (1) according to claim 6, wherein the second return member comprises a spring (12) and the means (15) for adjusting the over-opening position comprise a cable (15) of adjustable length connected to an end of the spring (12).

8. Gripper (1) according to one of the preceding claims, wherein the finger (3) comprises a third phalanx (30) connecting the first phalanx (10) and the second phalanx (20), the third phalanx (30) comprising a second bar (32) comprising a fifth end (33) articulated on the first phalanx (10) and a sixth end (34) articulated on a first connecting rod (31), the third phalanx (30) also comprising a third bar (35) comprising a seventh end (36) articulated on the first phalanx (10) and an eighth end (37) articulated on the first connecting rod (31), the first end (22) and the third end (42) being articulated at the first connecting rod (31).

9. Gripper (1) according to claim 8, wherein a projected orthogonal of the third end (42) on a straight line (D1) connecting the first end (22) and the eighth end (37) belongs to a segment (Seg1) connecting the first end (22) and the eighth end (37).

10. Gripper (1) according to claim 8 or claim 9, wherein the first end (22) is articulated on the sixth end (34).

11. Gripper (1) according to any one of the preceding claims 8 to 10, wherein the second phalanx (20) comprises the first return member (25).

12. Gripper (1) according to any one of claims 8 to 11, wherein the third phalanx (30) comprises a fourth member (39) for returning the finger (3) to the opening configuration.

13. Gripper (1) according to any one of the preceding claims, wherein:
the second phalanx (20) comprises a first bar (21) comprising a first end (22) pivotingly connected to the first phalanx (10) and a second end (23) pivotingly mounted on the frame (2) about the first axis (01), and
the second phalanx (20) also comprises a linear actuator (40) comprising a third end (42) pivotingly connected to the first phalanx (10) and a fourth end (43) pivotingly mounted on the frame (2), the first bar (21) and the linear actuator (40) being arranged to form a first deformable quadrilateral (24), wherein a distance separating the third end (42) from the fourth end (43) can be modified.

14. Gripper (1) according to claim 13, wherein the linear actuator (40) comprises a screw jack, preferably a jack comprising a ball screw (41).

15. Gripper (1) according to any one of claims 13 to 14, wherein the linear actuator (40) is connected to the finger (3) and/or to the frame (2) by a sliding pivot-type connection with limited sliding of third axis (O3) substantially parallel to the first axis (01).

16. Gripping device (100) comprising a plurality of grippers (110, 120, 130, 140) according to any one of the preceding claims.

17. Gripping device (100) according to claim 16, wherein each finger (113, 123, 133, 143) of the plurality of grippers (110, 120, 130, 140) is articulated on its frame about a fifth axis (O5, O6, O7, O8) substantially orthogonal to the first axis (01).

18. Gripping device (100) according to claim 17, wherein, a rotation of each finger (3) relative to the frame (2) about the fifth axis (O5, O6, O7, O8) is actuated.

19. Gripping device (100) according to any one of claims 16 to 18, wherein each finger (113, 123, 133, 143) of the plurality of fingers (113, 123, 133, 143) is also slidingly mounted relative to the frame (2).

20. Gripping device (100) according to claim 19, wherein, a translation of each finger (113, 123, 133, 143) relative to the frame (2) is actuated.
